Europäisches Patentamt

(19) European Patent Office    (11) Publication number:    **0 168 192**

Office européen des brevets    **B1**

(12)    **EUROPEAN PATENT SPECIFICATION**

(45) Date of publication of patent specification: **25.04.90**    (51) Int. Cl.⁵: **H 04 B 10/06**

(21) Application number: **85304473.3**

(22) Date of filing: **24.06.85**

(54) **Receiver for lightwave transmission system using homodyne detection.**

(30) Priority: **02.07.84 US 627278**

(43) Date of publication of application:
**15.01.86 Bulletin 86/03**

(45) Publication of the grant of the patent:
**25.04.90 Bulletin 90/17**

(84) Designated Contracting States:
**DE FR GB**

(56) References cited:
**EP-A-0 016 608**

**PATENTS ABSTRACTS OF JAPAN, vol. 8, no 84
(E-239)1521r, 18th April 1984; & JP-A-59 5757
(NIPPON DENSHIN DENWA KOSHA) 12-01-1984**

**PATENTS ABSTRACTS OF JAPAN, vol. 3, no.
135, 10th November 1979, page 650 E 150; &
JP-A-54 114 005 (NIPPON DENSHIN DENWA
KOSHA) 09-05-1979**

(73) Proprietor: **AMERICAN TELEPHONE AND
TELEGRAPH COMPANY**
**550 Madison Avenue**
**New York, NY 10022 (US)**

(72) Inventor: **Bergano, Neal Salvatore**
**493 Highway 79**
**Morganville New Jersey (US)**
Inventor: **Schulte, Harry John, Jr.**
**10 Rustic Terrace**
**Fair Haven New Jersey 07701 (US)**
Inventor: **Wagner, Richard Edward**
**33 McCarter Avenue**
**Fair Haven New Jersey 07701 (US)**

(74) Representative: **Watts, Christopher Malcolm
Kelway et al**
**AT&T (UK) LTD. AT&T Intellectual Property
Division 5 Mornington Road
Woodford Green Essex IG8 OTU (GB)**

Courier Press, Leamington Spa, England.

## Description

### Background of the invention

This invention relates to a receiver for a coherent lightwave transmission system which may be more particularly described as a system using a homodyne detector arrangement that operates in response to a received information modulated carrier signal and a received reference carrier signal.

Because of many recent developments in science and engineering, fiber optic communication systems are becoming commercially important. Enormous communication capacity can be provided economically and reliably between points on land or between points across wide bodies of water.

Currently commercial optical fiber communication systems use direct detection in the receivers of regenerators along the transmission line and in receivers located at the terminals. The direct detectors, however, have a limited signal-to-noise ratio.

It is well known that another class of optical detectors known as coherent detectors provides a substantially greater signal-to-noise ratio than the direct detectors provide. A coherent detector receives a multiplexed beam including an unmodulated carrier signal and an information modulated carrier signal. Those signals are demultiplexed. The unmodulated carrier signal is optically amplified and is used to. drive a laser local oscillator. The information modulated carrier signal is multiplexed with the amplified unmodulated carrier signal output of the laser local oscillator. An avalanche photodiode detects the information signal without using a carrier extraction circuit.

Such an optical receiver, as set out in the preamble of Claim 1, is disclosed in JP—A—59-5757, and a similar one is disclosed in JP—A—54-114005.

### Summary of the invention

With the invention as claimed the problems of variations in the transmission medium and in receiver alignment, due, for example, to changes in ambient conditions, are solved. Furthermore, in a preferred form of the invention, using a dual detector arrangement, the effect of excess noise caused by a high-level reference component, is also reduced.

### Brief description of the drawing

A better understanding of the invention may be derived by reading the following detailed description with reference to the appended drawings wherein:

Figure 1 is a block diagram of an optical transmission system including a receiver arranged for homodyne detection;

Figure 2 is a block diagram of an optical transmitter arrangement;

Figure 3 is a vector representation of a pair of orthogonal linearly polarized beams;

Figure 4 is a perspective view of a time function of a linearly polarized information modulated carrier signal and a linearly polarized reference signal which are orthogonal to each other;

Figure 5 is a perspective view of a series of vectors resulting at different times from the signals shown in Figure 4;

Figure 6 is a graphic representation of received orthogonal elliptically polarized optical beam states after the beam is propagated through a transmission medium;

Figure 7 is a graphic representation of the pair of received orthogonally polarized optical beam states of Figure 6 after they traverse a mode converter in the receiver;

Figure 8 is a block diagram of a receiver arranged for optical homodyne detection;

Figure 9 is a schematic diagram of a polarization control signal circuit used in the receiver of Figure 8;

Figure 10 is a polarization error signal waveform;

Figure 11 is a graphic representation of the relationship between the polarization error signal magnitude and the polarization control signal;

Figure 12 is a dither signal waveform;

Figure 13 is a characteristic curve;

Figure 14 is a schematic diagram of a phase control signal circuit used in the receiver of Figure 8;

Figure 15 is a phase error signal waveform;

Figure 16 is a graphic representation of the relationship between the baseband information signal magnitude and the phase control signal;

Figure 17 is another dither signal waveform; and

Figure 18 is a characteristic curve.

### Detailed description

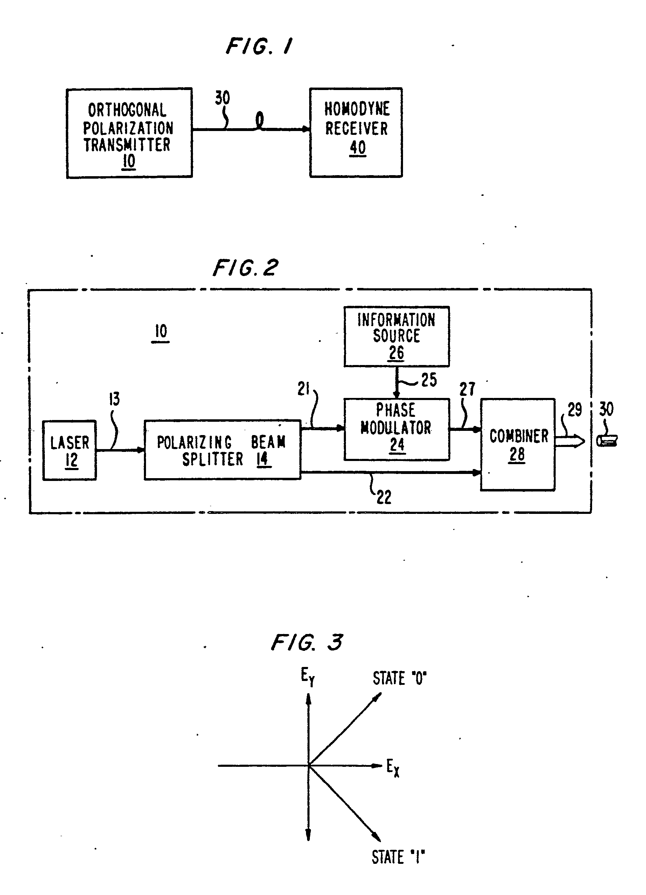

Referring now to Figure 1, there is shown a transmission system for transmitting electromagnetic wave signals from a transmitter 10 through a medium 30 to a receiver 40. The transmitter 10 produces a pair of coherent beams which are polarized orthogonally with respect to each other. One beam is phase shifted with an information signal and the other beam is a reference. These two beams are combined with each other in the transmitter 10 and are applied as a combined beam to the transmission medium 30 for propagation to the receiver 40. Transmission medium 30 can be any known electromagnetic wave transmission medium for transmitting over a long distance, e.g. an optical fiber, another optical guide, air, a vacuum or another medium. For the illustrative embodiment of the invention described herein, the transmission medium is assumed to be a long optical fiber and the transmitter modulator, a phase shift keyed modulator. Other modulation schemes can be used. Receiver 40, which is located remotely from the transmitter 10, includes an optical coherent detector arranged for homodyne detection of the baseband information signal which is carried by the combined beam.

Referring now to Figure 2, the transmitter 10 is shown in greater detail. A source 12 of coherent electromagnetic wave energy, such as a laser or other device, is arranged to generate a single linearly polarized electromagnetic beam 13 and to apply it to a polarizing beam splitter 14. The polarizing beam splitter may be any known beam splitter, which is responsive to the linearly polarized beam 13 incident to the internal reflective surface, for producing two coherent beams 21 and 22. Beams 21 and 22 emerge from the polarizing beam splitter 14 with orthogonal polarizations. The resulting orthogonally polarized beams 21 and 22 are transmitted from the polarizing beam splitter respectively to a phase shift keying modulator 24 and a combiner 28.

Beam 21 is applied to the phase shift keying modulator 24 which also receives a baseband information signal 25 from an information source 26. This baseband information signal phase shift modulates the optical carrier beam 21. The information source 26 may be one or more of many known sources—such as telephone or telegraphic circuits, television equipment, a computer or other equipment—which produce either analog or digital information. A resulting information modulated beam 27 and the unmodulated, or reference, beam 22 are applied to the optical combiner 28. In the optical combiner 28, the two coherent and orthogonally polarized beams 27 and 22 are combined into a single output beam 29. This combined beam 29 is launched into an is transmitted through the transmission medium 30.

Although either analog or digital information can be carried by the beam 29, the subsequent description presents an example using digital information.

Referring now to Figure 3, the vectorial relationship between the beams 22 and 27 is shown graphically for the digital information example. Beam 22, the reference signal, is shown illustratively to be linearly polarized at zero degrees, i.e., along the horizontal axis $E_x$. The beam 27, which is the information modulated carrier signal, is shown illustratively as a linearly polarized beam at 90 degrees positive and negative, i.e., along the verticl axis $E_y$. Because they are polarized in planes normal to one another the beams 22 und 27 are polarized orthogonally with respect to each other.

Since it is phase shift modulated, the information modulated carrier signal vector may lie either in a position at 90 degrees positive to represent a logic zero or in an alternative position at 90 degrees negative to represent a logic one, as shown by the oppositely poled vectors on the vertical axis of Figure 3. The reference beam is not modulated so it has a vector that constantly lies along the positive horizontal axis. The resulting polarization vector—a result of combining the information modulated carrier signal and the reference signal—can be in either of two positions depending on the information states, zero and one. These two resulting states are orthogonally polarized, as shown by the vectors representing state "0" and state "1" in Figure 3.

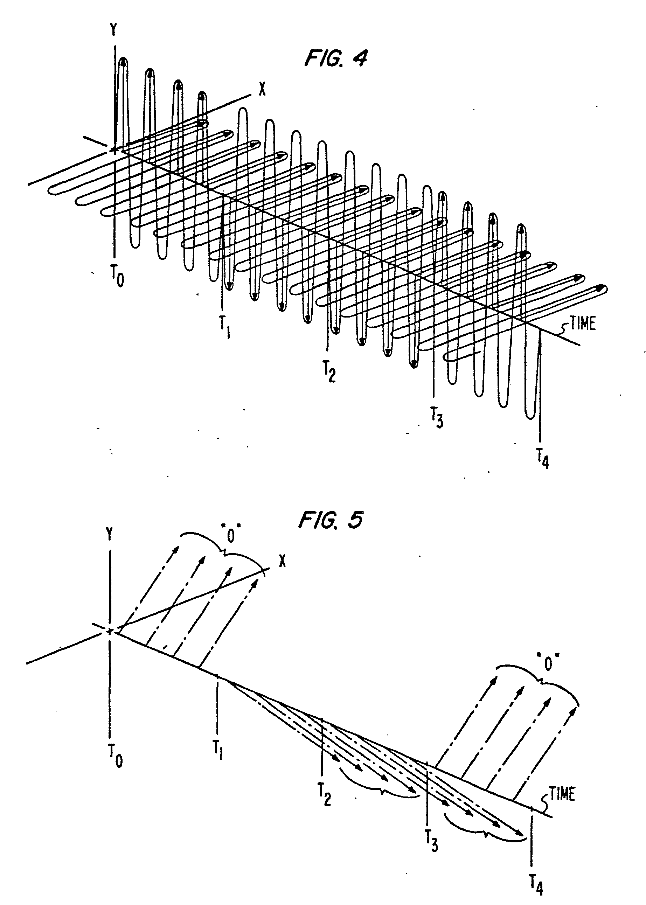

Figures 4 and 5 show perspective views of the time functions of the orthogonally polarized information modulated signal and the reference signal together with periodic resultant vectors. Along the time axis in the vertical time vs. y plane of Figure 4, there is shown an illustrative polarized sinusoidal waveform that represents the phase shift keyed, or information modulated, carrier signal. Illustratively four cycles of the carrier waveform are included in each information pulse.

In a first time slot beginning at time $T_0$ and ending at time $T_1$, a logic zero is transmitted. To represent the logic zero during the first time slot, the carrier waveform goes positive at the beginning time $T_0$ and continues without any phase change through the four cycles ending at the time $T_1$.

In a second time slot, a logic one is transmitted. At the time $T_1$ the information signal changes the phase of the carrier by 180 degrees to represent the logic one. This phase change is shown at the time $T_1$ in the information modulated carrier waveform of Figure 4. During the second time slot between times $T_1$ and $T_2$, the information modulated carrier signal initially goes negative and continues without any other phase change throughout the second time slot.

During a third time slot between times $T_2$ and $T_3$, another logic one is transmitted. To represent the logic one, the information modulated carrier signal goes negative at the time $T_2$. Because a logic one was transmitted during the last preceding time slot, the information modulated carrier signal continues without any phase change between the second and third time slots.

During a fourth time slot between times $T_3$ and $T_4$, another logic zero is transmitted. The information modulated carrier signal goes positive at the time $T_3$ to represent the one. Once again there is a 180 degree phase shift in the information modulated carrier signal. This phase shift occurs at the time $T_3$. Again four cycles of the carrier occur during the fourth time slot between the times $T_3$ and $T_4$.

Continuously from the time $T_0$ through all four of the time slots, the reference signal is shown as a sine wave that is linearly polarized in the horizontal time vs. x plane. This reference signal is continuously transmitted without any phase change or amplitude change.

When the superposed information modulated carrier signal and reference signal are sampled every cycle, those signals both are at their peak values, as shown by the several vectors in Figure 4.

Along the time axis in Figure 5, there is a series of resultant vectors for the superposed information modulated carrier signal and reference signal. These resultant vectors are derived directly from the concurrent pairs of vectors of the information modulated carrier signal and reference signal shown in Figure 4. Thus during each of the first and fourth time slots in Figure 4, there are four logic zero resultant vectors. The four resultant vectors during the first time slot represent a logic zero launched into the transmission medium 30 of Figure 1. Again during the fourth time slot, there are four resultant vectors which represent another logic zero launched into the transmission medium. Similarly, during each of the second and third time slots of Figure 5, there are four resultant vectors. Each of those groups of four resultant vectors represents a logic one launched into the transmission medium 30 of Figure 1.

In the transmission medium 30, the combined beam 29 is subjected to transmission impediments while propagating to the receiver 40. Both of the orthogonal polarization states included in the beam 29 are subjected to the same transmission impediments in the medium 30. As a result the two states are subjected to similar effects resulting from transmission through the medium 30. They continue to be coherent and to maintain their orthogonal polarization relationship.

Even though the two states maintain their orthogonal polarization relationship, the beam may appear with a different polarization state at the receiver 40 of Figure 1 than at the output of the transmitter 10. For instance, the relative phase of the two orthogonal states could change because of birefringence in the transmission path 30 of Figure 1. At the far end of that path, the polarization of the beam is rotated through some arbitrary angle. The angle of rotation is the same or nearly the same for both transmitted polarization states. In general at the far end of the transmission medium, the two received signal states are polarized elliptically and not linearly. Advantageously, the two signal states maintain their orthogonal polarization relationship.

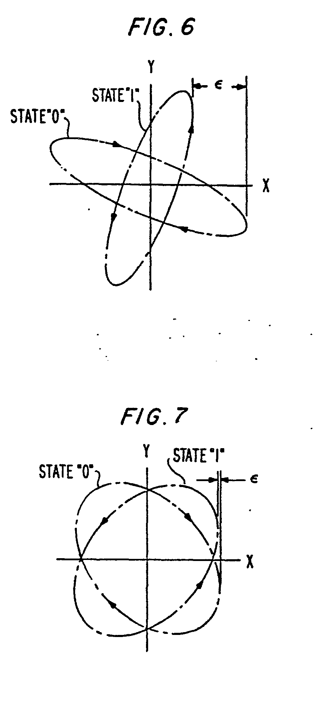

Referring now to Figure 6, there is shown an example of how the two states may be polarized when they are received at the receiver 40. In the illustration, the states are elliptically polarized at an arbitrary angle with the reference axes, as shown by the dotted ellipses. It is noted that there is a different maximum component of each polarization state along the x-axis. The misalignment, or difference, ε between the maximum components along the x-axis is used for controlling the orientations of the polarizations of the two beams by a feedback arrangement within the receiver. Ideally the feedback arrangement will change the state of polarization until the maximum components of the two polarization states along the x-axis are nearly equal—that is, the misalignment ε is minimal.

Figure 7 illustrates a nearly ideal orientation of the two states of polarization with the maximum components along the x-axis nearly the same magnitude. When they are ideally oriented, their x-axis components are equal and their major axes lie at 45 degrees above and below the x-axis.

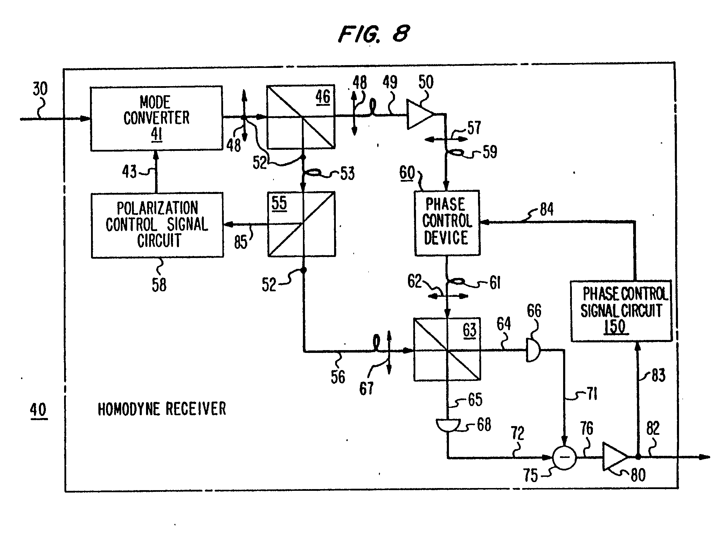

Referring now to Figure 8, the homodyne receiver 40 is shown in greater detail. The transmission medium 30 applies the received beam—the coherent information modulated signal and the reference signal—to a mode converter 41, which controllably changes their states of polarization. Although arbitrary polarization states are applied to the input of the mode converter, ideal states of polarization are produced at its output. At the output of the mode converter 41, the magnitudes of the components of light along the x-axis are equal for the two states of polarization. This ideal polarization occurs when the major axes of the polarization ellipses are oriented at 45 degrees from the axes of a beam splitter 46. Such beam splitter axes are the axes shown graphically in Figure 7.

A suitable mode converter is disclosed in U.S. Patent 4,384,760 as a polarization transformer In response to an electrical polarization control signal on lead 43, the mode converter 41 changes the polarization states of the received beam from the arbitrary orientation to the desired orientation. The control signal is applied to the input TE/TM phase shifter control terminal with the phase matched TE/TM converter set for equal coupling in the polarization transformer of U.S. Patent 4,384,760.

Each of the orthogonally polarized signal states produced by the mode converter 41 is composed of x and y components 48 and 52 along the x and y axes represented in Figure 7. All of the components are coherent.

In the homodyne receiver 40, these coherent components 48 and 52, produced by the mode converter 41, are applied to the polarizing beam splitter 46. The beam splitter 46 is oriented so that its two output beams are the two x and two y components 48 and 52, respectively.

The two x components are shown in Figure 8 by arrows 48, which represent a polarization vector oriented parallel to the plane of the paper. Although these components could represent either the reference signal or the information modulated carrier signal, for illustrative purposes, hereinafter, the x components represented by the arrows 48 are considered to represent the reference component. It is transmitted through the beam splitter 46 without change and is applied directly to a polarization maintaining optical fiber 49. Such a fiber is described by I. P. Kaminow in "Polarization in Optical Fibers", *IEEE Journal of Quantum Electronics*, Vol. QE-17, pp. 16—22, January 1981. The reference component is transmitted through the fiber 49 without change of polarization and is applied to an optical amplifier 50, as a low level reference component. The optical amplifier may be any one of several devices, such as an injection locked laser, a semiconductor laser or a linear amplifier. Advantageously the optical amplifier, or laser, 50 amplifies the reference components and produces on a polarization maintaining fiber 59 an amplified reference component, or amplified oscillation signal, that is coherent with the carrier frequency of the information component. This amplified reference component is coupled into and through the polarization maintaining optical fiber 59 and is represented by arrows 57 in Figure 8.

A phase control device 60 receives the amplified reference component of the fiber 59 and varies the phase thereof in response to a phase control signal supplied over a lead 84. This phase control signal is used to compensate for relatively slow variations in the transmission medium and in receiver alignment. Generation of the phase control signal is described subsequently. The phase adjusted amplified reference component is transmitted through a polarization maintaining fiber 61. This phase adjusted amplified reference component is represented there by arrows 62 representing polarization parallel to the plane of the paper.

In Figure 8, the two $y$ components of the received beam are shown by dots 52 representing polarization oriented normal to the plane of the drawing surface. These $y$ components represent the information component for the received beam. This information component is used for both detecting and controlling polarization states. A fixed relationship between the orientation of the states of polarization and the axis of the beam splitter 46 is achieved by a polarization controller arrangement. The polarizing beam splitter 46 couples the information component into and through a polarization maintaining fiber 53 to a tapping beam splitter 55. Most of the energy of the information component 52 is transmitted through the beam splitter 55 and is applied to another polarization maintaining fiber 56. A small portion of the energy of the information component is reflected by the tapping beam splitter 55 to a polarization control signal circuit 58 which produces the electrical signal for controlling changes of the polarization states of the received light beam.

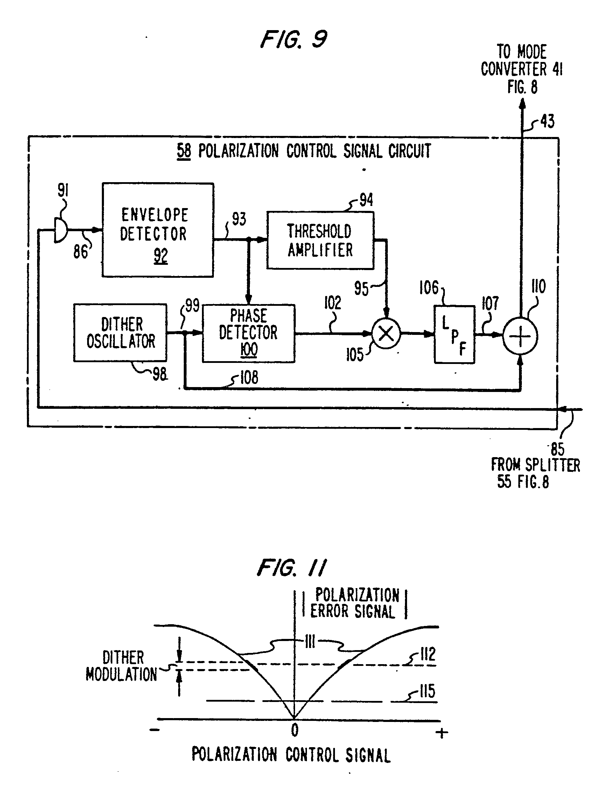

In response to the portion of the information component which is applied to the polarization control signal circuit, that circuit 58 produces the electrical polarization control signal. A block diagram of the polarization control signal circuit 58 is shown in Figure 9.

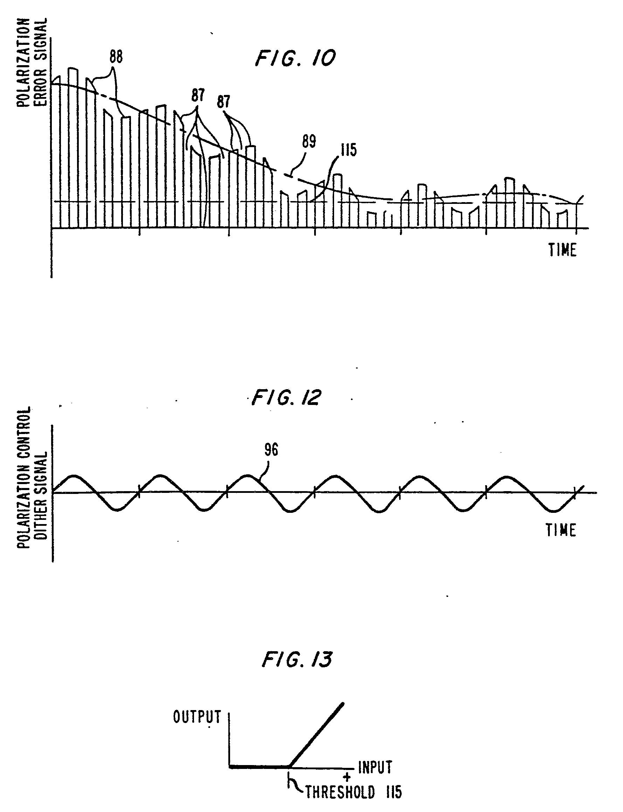

In Figure 9 the optical signal on the lead 85 from the beam splitter 55 is detected by an optical sensor 91. This detected signal on a lead 86 includes a pulse sequence 87 at the line signalling rate, as shown in Figure 10.

In Figure 10 the pulse sequence is simply a series of alternate ones and zeroes. The magnitude of the envelope 88 of the detected pulse sequence is related to the misalignment ε in Figure 6. This magnitude is zero when the mode converter 41 of Figure 8 is set for equal powers in the $y$ output components 48 for both "0" and "1" signalling states. The rest of the polarization control signal circuit 58 of Figure 9 is arranged to minimize that magnitude. The magnitude of the envelope 88 in Figure 10 from the optical sensor 91 of Figure 9 is the polarization error signal, which is extracted from the bit pattern by an envelope detector 92 and is applied to a lead 93 in Figure 9.

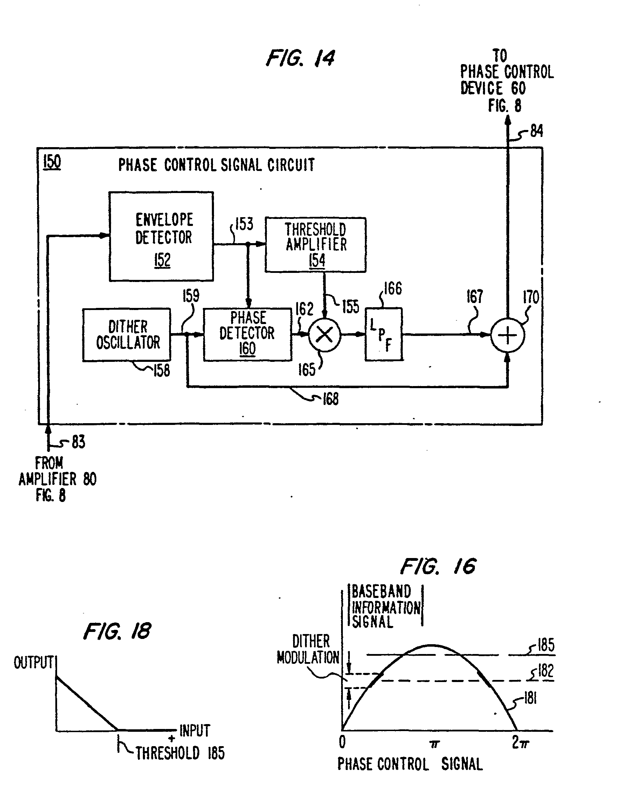

Figure 11 shows a characteristic curve of the magnitude of the polarization error signal on the lead 93 versus the polarization control signal on the lead 43. The magnitude of the error signal on the lead 93 varies slowly as shown by a curve 89 in Figure 10, depending upon ambient conditions along the transmission medium shown in Figure 1. Additionally that magnitude is modulated by a dither component to be described. Since the polarization error signal is an even function of the polarization control signal, as shown in Figure 11, a control ambiguity exists. To remoe this ambiguity, a low frequency oscillator 98 in Figure 9 generates a dither signal for the polarization control signal circuit.

Figure 12 shows a waveform of the polarization control dither signal 96. This low frequency dither signal occurs on a lead 108 of Figure 9 and is added into the polarization control signal by an adder 110. Thus the polarization control signal is modulated. This modulated polarization control signal changes the setting of the mode converter 41 of Figure 8 and thereby modulates the polarization error signal, as shown by the envelope of the pulse sequence in Figure 10.

A phase detector 100 in Figure 9 compares the phase of the polarization error signal modulation to the phase of the dither signal from the dither oscillator 98 for resolving the control ambiguity in the polarization error signal.

The polarization error signal on the lead 93 is applied to a threshold amplifier 94.

Figure 13 illustrates a characteristic curve for this amplifier 94. By way of a lead 95, a resulting output signal from the amplifier 94 is supplied as an input to a multiplier 105 in Figure 9.

The polarization error signal with its modulation on the lead 93 also is applied to the phase detector 100 together with the dither signal on the lead 99. Phase detector 100 produces on a lead 102 a phase signal which is either a positive or a negative polarity. These polarities depend upon whether the polarization control signal is in the left half or the right half of the curve in Figure 11. The phase signal on the lead 102 is applied as another input to the multiplier circuit 105.

The output signal from the multiplier 105 is filtered through a low pass filter 106 to remove residual oscillations at or near the frequency of the dither signal. However, slow variations produced by ambient changes remain in the signal. The low pass filter 106 produces a signal that is either positive, negative, or zero depending upon whether the mode converter 41 needs to adjust the misalignment ε positively, negatively, or not at all to minimize the misalignment. The magnitude of the multiplier output signal is dependent upon how much correction is needed to adjust misalignment.

Referring again to Figure 11 and assuming that the polarization control signal is in the lefthand half of the curve, a positive polarity dither signal forces the summed signal down the polarization error signal curve toward a desired upper limit magnitude, represented by a long dashed line 115. The polarization control signal produced by the adder 110 in Figure 9 is applied by way of the lead 43 to the input phase control terminal of the mode converter 41 in Figure 8. Insofar as the magnitude of the difference between the x-axis components of the logic ones and zeros tapped from the information component decreases, the control signal on the lead 43 continues to change until the null is reached. This polarization control signal applied to the mode converter 41 varies the amount of polarization change imparted to the received beam. If, on the other hand, a negative polarity dither signal is applied, it forces the summed signal up the polarization error signal curve away from the desired magnitude limit 115.

Contrarily when the polarization error signal is in the righthand half of the curve 111, a negative polarity dither signal will drive the polarization error signal down the curve toward the desired limit 115. A positive polarity dither signal will drive the polarization error signal up the curve away from the desired limit 115. When the polarization error signal is below the limit 115, the amplifier 94 produces a zero output, as shown in Figure 13. This zero is carried through the multiplier, the low pass filter and the adder to the lead 43. As a result, no polarization error signal is supplied to the mode converter when the error signal is low.

As a result of this feedback control arrangement, the magnitude of the reference component and the magnitude of the information component are maintained nearly equal on the x-axis and on the y-axis as they emerge from the mode converter 41 in Figure 8. This assures a fixed relationship between the states of polarization of the reference component and the information component.

Because the components applied to the optical fibers 56 and 61 in Figure 8 are orthogonally polarized, the fiber 56 is rotated 90 degrees about its axis so the components in the fibers 56 and 61 are polarized in the same plane when they are recombined, or mixed, in the coupler 63. The rotated information component in the fiber 56 is reprdsented by an arrow 67 representing polarization parallel to the plane of Figure 8. Even though we have just described the fiber 56 as being rotated, in actual practice either of the fibers 56 or 61 can be rotated to achieve the desired polarization in a common plane.

In the coupler 63, the two coherent components are superposed upon one another in two separate paths. Since the components are aligned in polarization within the coupler 63, the amplitudes of their fields add and interfere with each other, producing two complementary but coherent output beams 64 and 65. These output beams are intensity modulated because of relative phase shifts which occur between the reference component 62 and the information component 67. The output beams 64 and 65 drive an optical dual-detector including a pair of optical detectors 66 and 68 in an optical balanced mixer arrangement. The pair of detectors minimizes the effect of excess noise caused by the high level reference components 62.

The arrangement from the mode converter 41 to the coupler 63 includes apparatus for amplifying the reference component differently than the information component is amplified. Although in the described arrangement, the reference component is amplified relatively more than the information component, the opposite case also will work. An important feature is that those components are coherent. Another important feature is that the reference components and the information component are amplified differently to increase the signal.

The optical detectors 66 and 68 produce electrical output signals which are amplitude modulated in accordance with the intensity of the light beams 64 and 65. The mean photocurrents produced by the detectors 66 and 68 in response to the beams 64 and 65 contain both a d.c. component and a baseband information signal. The baseband information signals produced by the detectors are 180 degrees out of phase with each other. Excess local oscillation noise occurring in either one of the detectors is in phase with the local oscillation noise occurring in the other detector. The output photocurrents from the detectors 66 and 68 are applied, respectively, by way of leads 71 and 72 to separate inputs of a subtractor circuit 75. A difference signal—representing the difference between the baseband information signals on the leads 71 and 72—is produced on a lead 76. Taking the difference between the two output photocurrents effectively doubles the baseband information signal and cancels the excess noise. This difference signal contains the desired baseband information signal being transmitted.

A more complete description of the arrangement and operation of an optical dual-detector is presented by H. J. Yuen in his paper FC2, CLEO, 1983 and by G. L. Abbas and V. W. S. Chan in their paper on pages 12.5.1 through 12.5.6, *IEEE Globecom*, 1983.

An electrical output amplifier 80 produces on a lead 82 an output signal which is an amplified version of the baseband information signal being transmitted. This baseband information signal also is applied by way of a lead 83 to a phase control signal. circuit 150. This phase control signal circuit 150 produces an electrical phase control signal on a lead 84. That signal is applied to the phase control device 60 for controlling the phase of the reference component. A block diagram of the phase control signal circuit 150 is shown in Figure 14 to be described subsequently.

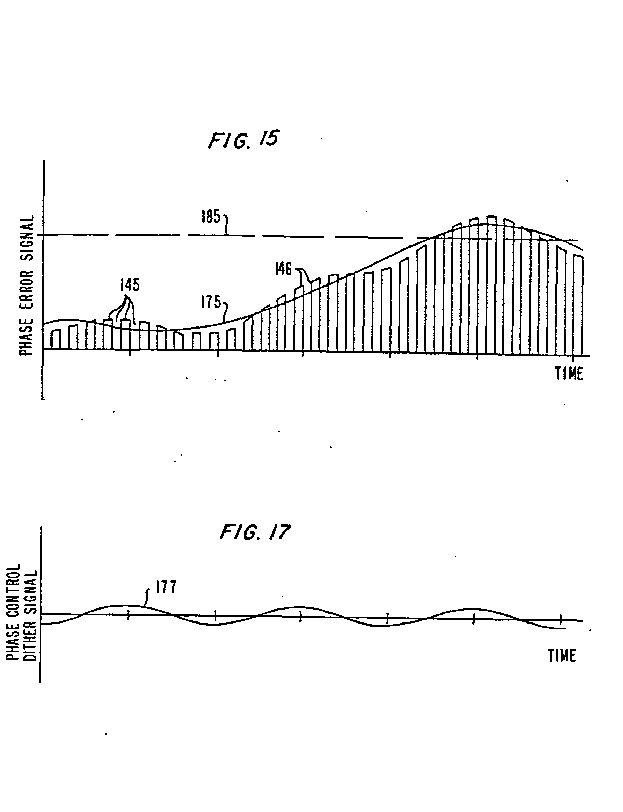

In Figure 15, the magnitude of the baseband information signal on the lead 83 is related to the phase misalignment, or phase error, between the reference component 62 and the information signal component 67 of Figure 8. The illustrative baseband information signal 145 in Figure 5 is a sequence of alternate ones and zeros to clearly show the envelope of the sequence. The magnitude of the envelope 146 of the baseband information signal is at a maximum when the phase misalignment is zero. Control circuit 150 minimizes this phase mialignment, or difference, at the coupler 63 by maximizing the magnitude of the envelope of the baseband information signal that occurs on the lead 83.

Referring now to the circuit 150 in Figure 14, the envelope of the pulse stream of the baseband information signal is extracted by an envelope detector 152 and is produced on a lead 153. This envelope of the baseband information signal produced on the lead 153 is related to the relevant phase misalignment, or difference, and is called a phase error signal. The rest of the phase control signal circuit 150 is arranged to maximize the magnitude of that envelope.

Figure 16 shows a characteristic curve for the remaining part of the circuit 150 by presenting the magnitude of the envelope of the baseband information signal, i.e., the phase error signal, on the lead 153 versus the phase control signal on lead 84 in Figures 8 and 14.

The phase error signal that appears on lead 153 of Figure 14 varies slowly depending upon ambient conditions along the transmission medium 30, as well as in the receiver apparatus. Such ambient fluctuation is shown in Figure 15 by a curve 175. In addition to the ambient fluctuations, the envelope of the baseband information signal, or the phase error signal, is modulated by dithering which is described further subsequently.

Because the magnitude of the baseband information signal is an even function of the phase control signal, as shown in Figure 16, a control ambiguity exists. To resolve this ambiguity, a low frequency dither oscillator 158 produces a dither signal for the phase control signal circuit. This low frequency dither signal is added into the phase control signal on lead 84 by way of a lead 168 and an adder 170.

Figure 17 shows a waveform of the phase control dither signal 177. The waveform of Figure 17 is plotted on the same time scale as the waveform of Figure 15 to show the effect of dither on the envelope of the baseband information signal.

The modulated phase control signal on the lead 84 changes the setting of the control of the phase control device 60 in Figure 8 and modulates the magnitude of the baseband information signal on the lead 83. This of course also modulates the magnitude of the phase error signal appearing on the lead 153 in the phase control signal circuit 150 of Figure 14.

In Figure 14, a phase detector 160 compares the phase of the phase error signal on the lead 153 with the phase of the dither signal on the lead 159 to resolve the control ambiguity. The output of the phase detector 160 is either a positive or a negative polarity on a lead 162. It is applied to an input of a multiplier 165. Concurrently, the phase error signal on the lead 153 is amplified by a circuit 154 having a threshold characteristic.

Referring now to Figure 18, there is presented a characteristic curve for the amplifier ciruit 154. The output of this circuit 154 appears on a lead 155 that is applied as a second input to the multiplier 165.

After being multiplied by the positive or negative polarity signal on the lead 162, the phase signal traverses a low pass filter 166 which removes any residual oscillation at or near the frequency of the phase control dither signal. The slow variation, produced by ambient changes in the transmission medium or other parts of the system, is preserved in the phase signal.

The phase signal on the lead 167 is a signal that is either positive, negative, or zero depending upon whether the phase control device 60 of Figure 8 needs to adjust the phase positively, negatively or not at all to maximimize the magnitude of the baseband information signal.

Assuming that the magnitude of the baseband information signal is in the lefthand half of the curve of Figure 16, a signal having a positive phase shift with respect to the information signal forces the summed signal up the baseband information signal magnitude curve toward a desired lower limit magnitude, represented by a long dashed line 185. The signal produced by the adder 170 in Figure 14 is applied by way of the lead 84 to the control terminal of the phase control device 60 in Figure 8. Insofar as the magnitude of the difference between the phases decreases, the control signal on the lead 84 continues to increase toward the maximum. This increase of the control signal applied to the phase adjusting device increases the amount of phase change imparted to the reference component.

When the magnitude of the baseband information signal is in the righthand half of the curve 181, a positive phase shift of the dither signal will drive the magnitude of baseband information signal down the curve away from the desired limit 185. A negative phase shift of the dither signal will drive the magnitude of the baseband information signal up the curve toward the desired limit 185.

When the magnitude of the basebase information signal exceeds the limit 185, the amplifier circuit 154 produces a zero output, as shown by its characteristic in Figure 18. This zero output is carried through the multiplier, the low pass filter and the adder to the lead 84. Thus, no phase error correction is imparted when the baseband information signal exceeds the lower limit.

Since the magnitude of the baseband information signal is also related to the received optical power (P) incident on the homodyne receiver (40 Figure 1) the threshold 185 will also be related to P. If the average optical power is known a priori, the threshold could be preset. Alternatively, if this value is not known a priori, it could be derived from the average photocurrent in detectors 66, 68, and 91. Thus by monitoring the optical power the threshold 185 could be dynamically varied to reflect changes in the received power.

As a result of this feedback control arrangement, the average phase difference between the reference component and the information component is maintained relatively unchanged at a value that minimizes the phase shift and maximizes the magnitude of the baseband information signal.

Although the phase control has been described as a separate phase control device, it is a function that can be provided as an integral part of the optical amplifier 50. Small modulations in the drive current for the optical amplifier or in the temperature of the optical amplifier can provide the desired control function. Alternatively, the phase control function can be provided by applying the control signal to the mode converter 41 at an output phase control lead, as described in the Alferness patent mentioned hereinbefore. With such arrangements as those just mentioned, the phase control device 60 of Figure 8 is superfluous.

In Figure 8 components using special arrangements of fibers can be substituted for the mode converter 41, the beam splitters 46 and 55, the optical amplifier 50, the phase control device 60, and the combiner 63 for providing an arrangement without any bulk optical components or glass to air interfaces.

## Claims

1. A receiver for a coherent electromagnetic wave transmission system, for receiving from a transmission medium (30) a beam including a reference carrier signal and an information modulated carrier signal which are coherent and orthogonally polarized with each other, amplitude control means (50) responsive to the beam received from the transmission medium for applying a different amplification to a component of the reference carrier signal than to a component of the information modulated carrier signal and combining means (63, 66, 68, 75) for mixing the amplified reference component with the coherent information component to produce a baseband information signal, characterised by a polarization controller (55, 58, 41) responsive to states of polarization of the reference carrier signal and the information modulated carrier signal for maintaining a fixed relationship between the states of polarization, phase control signal generating means (150), responsive to the baseband information signal, for producing a phase control signal, and phase control means (60) responsive to the phase control signal for controlling the relative phase between the reference carrier signal and the information modulated carrier signal.

2. A receiver as claimed in Claim 1 wherein the combining means comprises means (63) for superimposing the said components upon one another in two separate paths to produce two complementary output beams (64, 65), a pair of optical detectors (66, 68) arranged to receive respective ones of the complementary output beams and a subtractor circuit (75) arranged to derive a difference signal from the output signals of the optical detectors.

## Patentansprüche

1. Empfänger für eine Übertragungssystem mit kohärenten elektromagnetischen Wellen zur Aufnahme eines Strahls von einem Übertragungsmedium (30) mit einem Bezugsträgersignal und einem informationsmodulierten Trägersignal, die kohärent und orthogonal zueinander polarisiert sind, mit einer Amplitudensteuereinrichtung (50), die unter Ansprechen auf den vom Übertragungsmedium empfangenen Strahl eine Komponente des Bezugsträgersignals unterschiedlich gegenüber einer Komponente des informationsmodulierten Trägersignals verstärkt, und mit einer Kombiniereinrichtung (63, 66, 68, 75) zur Mischung der verstärkten Bezugskomponente mit der kohärenten Informationskomponente zur Erzeugung eines Basisband-Informationssignals, gekennzeichnet, durch ein Polarisationssteuergerät (55, 58, 41), das unter Ansprechen auf Polarisationszustände des Bezugsträgersignals und des informationsmodulierten Trägersignals eine feste Beziehung zwischen den Polarisationszuständen aufrecht erhält, eine Phasensteuersignal-Erzeugungseinrichtung (150), die unter Ansprechen auf das Basisband-Informationssignal ein Phasensteuersignal erzeugt, und eine Phasensteuereinrichtung (60), die unter Ansprechen auf das Phasensteuersignal die relative Phase zwischen dem Bezugsträgersignal und dem informationsmodulierten Trägersignal steuert.

2. Empfänger nach Anspruch 1, bei dem die Kombiniereinrichtung eine Einrichtung (63) zur gegenseitigen Überlagerung der genannten Komponenten auf zwei getrennten Wegen zur Erzeugung von zwei komplementären Ausgangsstrahlen (64, 65), ein Paar optischer Detektoren (66, 68), die jeweils einen der komplementären Ausgangsstrahlen aufnehmen, und eine Substrahierschaltung (75) aufweist, die aus den Ausgangssignalen der optischen Detektoren ein Differenzsignal ableitet.

## Revendications

1. Un récepteur pour un système de transmission d'ondes électromagnétiques de type cohérent, destiné à recevoir à partir d'un milieu de transmission (30) un faisceau comprenant un signal porteur de référence et un signal porteur modulé par de l'information, qui sont mutuellement cohérents et polarisés de façon orthogonale, comprenant des moyens de commande d'amplitude (50) qui réagissent au faisceau reçu à partir du milieu de transmission en appliquant à une composante du signal porteur de référence une amplification différente de celle qui est appliquée à une composante du signal porteur modulé par de l'information, et des moyens de combinaison (63, 66, 68, 75) pour mélanger la composante de référence amplifiée avec la composante d'information cohérente, pour produire un signal d'information en bande de base, caracterise par un dispositif de commande de polarisation (55, 58, 41) qui réagit à des états de polarisation du signal porteur de référence et du signal porteur modulé par de l'information, de façon à maintenir une relation fixée entre les états de polarisation, des moyens de génération de signal de commande de phase (150), qui réagissant au signal d'information en bande de base en produisant un signal de commande de phase, et des moyens de commande de phase (60) qui réagissent au signal de commande de phase en commandant la phase relative entre le signal porteur de référence et le signal porteur modulé par de l'information.

2. Un récepteur selon la revendication 1, dans lequel les moyens de combinaison comprennent des moyens (63) pour superposer l'une sur l'autre les composantes précitées, dans deux chemins séparés, afin de produire deux faisceaux de sortie complémentaires (64, 65), une paire de détecteurs optiques (66, 68) conçus pour recevoir des faisceaux respectifs parmi les faisceaux de sortie complémentaires, et un circuit soustracteur (75) conçu pour élaborer un signal de différence à partir des signaux de sortie des détecteurs optiques.

**FIG. 1**

**FIG.2**

**FIG. 3**

FIG. 4

FIG. 5

## FIG. 6

## FIG. 7

EP 0 168 192 B1

## FIG. 8

EP 0 168 192 B1

**F/G. 9**

TO MODE
CONVERTER 41
FIG. 8

43

**58 POLARIZATION CONTROL SIGNAL CIRCUIT**

91

86

ENVELOPE
DETECTOR
**92**

93

94

THRESHOLD
AMPLIFIER

95

106

107

110

DITHER
OSCILLATOR

99

98

PHASE
DETECTOR
**100**

102

105

×

L P F

108

85
FROM SPLITTER
55 FIG.8

**F/G. II**

| POLARIZATION |
| ERROR SIGNAL |

III

112

DITHER
MODULATION

115

−                0                +

POLARIZATION CONTROL SIGNAL

5

FIG. 10

FIG. 12

FIG. 13

FIG. 14

TO
PHASE CONTROL
DEVICE 60
FIG. 8

84

150 PHASE CONTROL SIGNAL CIRCUIT

ENVELOPE
DETECTOR
152

153

THRESHOLD
AMPLIFIER
154

155

166

167

170

159

DITHER
OSCILLATOR

158

PHASE
DETECTOR
160

162

165

L
P
F

168

83

FROM
AMPLIFIER 80
FIG. 8

FIG. 16

BASEBAND
INFORMATION
SIGNAL

DITHER
MODULATION

185

182

181

FIG. 18

OUTPUT

INPUT

+

THRESHOLD 185

0          π          2π
PHASE CONTROL SIGNAL

7

FIG. 15

FIG. 17